# EUROPEAN PATENT APPLICATION

(11) **EP 4 843 814 A1**
(43) Date of publication of application: **25.11.2026**
(21) Application number: 26172764.8
(22) Date of filing: 16.04.2026
(51) Int. Cl.: B60K 35/22, B60K 35/81

(54) **VEHICLE DISPLAY CONTROL APPARATUS, VEHICLE DISPLAY CONTROL METHOD, AND STORAGE MEDIUM STORING VEHICLE DISPLAY CONTROL PROGRAM**

(30) Priority: 19.05.2025 JP 2025083565
(71) Applicant: Toyota Jidosha Kabushiki Kaisha, Toyota-shi, Aichi-ken 471-8571 (JP)
(72) Inventor: TSUJINO, Miki, TOYOTA-SHI, AICHI-KEN, 471-8571 (JP)
(74) Representative: Cabinet Beau de Loménie

(57) **Abstract**

There are provided a vehicle display control apparatus, a vehicle display control method, and a storage medium storing a vehicle display control program provided in the vehicle display control apparatus, the vehicle display control apparatus including a display control unit configured to, when the driving assistance level of a vehicle (12) is changed, change the background color of a part of a display area (20, 22) provided in the vehicle (12) to a first system color that indicates the driving assistance level after being changed, and display at least a part of the display area (20, 22) in a predetermined system color to temporarily highlight the at least part of the display area (20, 22).

## Description

### BACKGROUND OF THE INVENTION

### 1. Field of the Invention

The technology disclosed herein relates to a vehicle display control apparatus, a vehicle display control method, and a storage medium storing a vehicle display control program.

Japanese Unexamined Patent Application Publication No. 2024-043822 (JP 2024-043822 A) discloses an information display device that allows a driver to instantly recognize the autonomous driving level of a vehicle. This information display device includes a monitor that displays an image, and a display controller that determines the autonomous driving level based on the system state of an autonomous vehicle and simultaneously displays an image of an operation unit of the vehicle and an image of a part of a person on the monitor according to the autonomous driving level.

### SUMMARY OF THE INVENTION

In the information display device described in the related-art document, an image relating to an operation corresponding to the autonomous driving level (i.e., driving assistance level) is displayed on the monitor. However, there is room for improvement in making an occupant whose line of sight is not directed to the monitor aware of a change in the driving assistance level.

The present disclosure provides a vehicle display control apparatus, a vehicle display control method, and a storage medium storing a vehicle display control program, that are capable of making an occupant aware of a change in the driving assistance level.

A first aspect of the present disclosure relates to a vehicle display control apparatus including a display control unit described below. The display control unit is configured to, when a driving assistance level of a vehicle is changed, change a background color of a part of a display area provided in the vehicle to a first system color that indicates the driving assistance level after being changed, and display at least a part of the display area in a predetermined system color to temporarily highlight the at least part of the display area.

With the vehicle display control apparatus according to the first aspect described above, when the driving assistance level is changed, the background color of a part of the display area is changed to a system color that indicates the driving assistance level after being changed, and a part of the display area is displayed in a predetermined system color to highlight such an area, making the occupant aware of a change in the driving assistance level.

In the vehicle display control apparatus according to the first aspect of the present disclosure, the display control unit may be configured to, when the driving assistance level is changed, change the background color of the part of the display area to the first system color, and display the part of the display area in the first system color to temporarily highlight the part of the display area.

With the vehicle display control apparatus configured as described above, the background color of a part of the display area is changed to a first system color, and a part of the display area is displayed in the first system color to temporarily highlight such an area, making the occupant aware of what level the driving assistance level has been changed to.

In the vehicle display control apparatus according to the first aspect of the present disclosure, the display control unit may be configured to, when the driving assistance level is changed, display the background color of the display area in a second system color that indicates the driving assistance level before being changed, until the background color of the part of the display area is changed to the first system color, and display the part of the display area in the first system color to temporarily highlight the part of the display area.

With the vehicle display control apparatus configured as described above, the background color of a part of the display area remains displayed in the second system color, and a part of the display area is displayed in the first system color to temporarily highlight such a part, making the occupant aware that the driving assistance level of the vehicle has been changed.

In the vehicle display control apparatus according to the first aspect of the present disclosure, the display control unit may be configured to, when a predetermined condition for lowering the driving assistance level is not met when the driving assistance level is to be lowered, display the background color of the part of the display area in a second system color that indicates the driving assistance level before being lowered until the predetermined condition is met. The display control unit may be configured to display the part of the display area in a third system color that is different from the first system color and the second system color to temporarily highlight the part of the display area.

With the vehicle display control apparatus configured as described above, the background color of a part of the display area remains displayed in the second system color, and a part of the display area is displayed in the third system color to temporarily highlight such a part, making the occupant aware that the driving assistance level cannot be lowered and prompting the occupant to perform an operation to lower the driving assistance level.

In the vehicle display control apparatus configured as described above, the predetermined condition may be a condition for canceling hands-off control that is a driving assistance function that provides assistance for acceleration, deceleration, and steering as long as an occupant is paying attention to an area ahead of the vehicle, even when the occupant takes the occupant's hands off a steering wheel of the vehicle.

In the vehicle display control apparatus according to the first aspect of the present disclosure, the display control unit may be configured to, when the driving assistance level is changed, change a display mode of a host vehicle image indicating the vehicle and displayed in the display area.

With the vehicle display control apparatus configured as described above, it is possible to make the occupant aware of a change in the driving assistance level by a change in the display of the host vehicle image, in addition to a change in the background color of a part of the display area.

In the vehicle display control apparatus according to the first aspect of the present disclosure, the display area may include a first display area whose display surface is disposed in an orientation to face a driver's seat of the vehicle, and a second display area located in a right-left direction of the first display area and whose display surface is disposed in a direction of the driver's seat. The display control unit may be configured to display a part of at least one of the first display area and the second display area in a predetermined system color to temporarily highlight the part of the at least one of the first display area and the second display area.

With the vehicle display control apparatus configured as described above, a part of at least one of the first display area and the second display area is displayed in a predetermined system color to temporarily highlight such a part, making the occupant more aware of a change in the driving assistance level.

A second aspect of the present disclosure relates to a vehicle display control method in which processing is executed by a computer. The vehicle display control method includes: when a driving assistance level of a vehicle is changed, (i) changing a background color of a part of a display area provided in the vehicle to a first system color that indicates the driving assistance level after being changed; and (ii) displaying at least a part of the display area in a predetermined system color to temporarily highlight the at least part of the display area.

With the vehicle display control method according to the second aspect described above, it is possible to make the occupant aware of a change in the driving assistance function.

A third aspect of the present disclosure relates to a computer-readable storage medium storing a program for executing a process for vehicle display control. The process includes, when a driving assistance level of a vehicle is changed, (i) changing a background color of a part of a display area provided in the vehicle to a first system color that indicates the driving assistance level after being changed, (ii) displaying at least a part of the display area in a predetermined system color to temporarily highlight the at least part of the display area, and (iii) causing the computer to execute the process for the vehicle display control.

With the storage medium from which the program for executing the vehicle display control can be read according to the third aspect, it is possible to make the occupant aware of a change in the driving assistance level.

With the vehicle display control apparatus, the vehicle display control method, and the storage medium storing a vehicle display control program according to the present disclosure, it is possible to make the occupant aware of a change in the driving assistance level.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram illustrating an overview of the configuration of a display area provided in a vehicle according to a first embodiment of the present disclosure;
FIG. 2 is a block diagram illustrating the hardware configuration of a vehicle display system according to the first embodiment;
FIG. 3 is a block diagram illustrating the functional configuration of a vehicle display control apparatus according to the first embodiment;
FIG. 4A illustrates an example of a display screen that is displayed when a condition for activating hands-off control according to the first embodiment is met;
FIG. 4B illustrates an example of a display screen that is displayed to indicate that the condition for activating the hands-off control according to the first embodiment is met;
FIG. 5A illustrates an example of a display screen that is displayed while ACC according to the first embodiment is in operation;
FIG. 5B illustrates an example of a display screen that is displayed to indicate that the ACC according to the first embodiment is in operation;
FIG. 6 illustrates an example of a display screen that is displayed when a condition for canceling the hands-off control according to the first embodiment is not met;
FIG. 7 is a flowchart illustrating an example of the flow of a display control process according to the first embodiment;
FIG. 8A is a diagram illustrating an example of a display screen of sub-displays according to a modification of the first embodiment;
FIG. 8B is a diagram illustrating an example of a display screen of the sub-display according to a modification of the first embodiment; and
FIG. 9 illustrates an example of a display screen that is displayed when a condition for activating hands-off control according to a second embodiment of the present disclosure is met.

### DETAILED DESCRIPTION OF EMBODIMENTS

A vehicle display system S according to embodiments of the present disclosure will be described below with reference to the drawings. In the drawings, the same or equivalent components are denoted by the same reference numerals. Furthermore, the dimensional proportions in the drawings are exaggerated for the sake of illustration and may be different from the actual proportions. Furthermore, the present disclosure is not limited to the following embodiments in any way, and can be implemented with appropriate modifications within the scope of the object of the present disclosure. Furthermore, the descriptions regarding colors in the following embodiments are merely examples and may be changed depending on the situation.

A first embodiment of the present disclosure will be described below. In the first embodiment, a case will be described in which, when the autonomous driving level of a vehicle 12 (hereinafter also referred to as a "host vehicle") to which a vehicle display control apparatus 10 is applied is changed, a display screen indicating that the autonomous driving level is changed is displayed in a display area provided in the vehicle 12. In addition, in the first embodiment, cases will be described in which the condition for activating the hands-off control described later is met and in which such a condition is no longer met while the radar cruise control (ACC/DRCC: Adaptive Cruise Control/Dynamic Radar Cruise Control) described later is in operation.

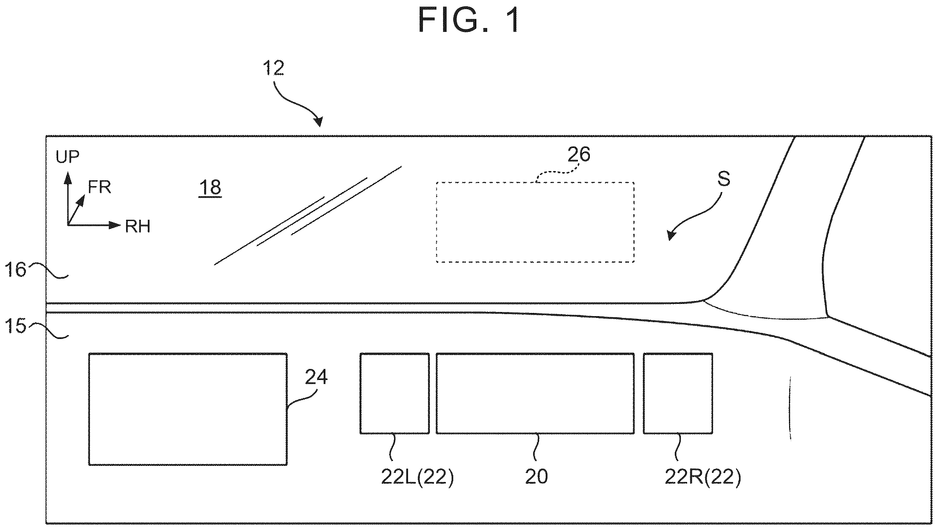

The display area will be described below. FIG. 1 is a block diagram illustrating an overview of the configuration of the display area provided in the vehicle 12 according to the first embodiment. As illustrated in FIG. 1, the display area of the vehicle 12 is configured to include a meter display 20, sub-displays 22, a multimedia display 24, and a head-up display 26 that are provided in the vehicle cabin 18 on the front side of the vehicle 12. The sub-displays 22 according to the present embodiment include a sub-display 22L located on the left side of the meter display 20 and a sub-display 22R located on the right side of the meter display 20. In the following description, when there is no need to distinguish between the sub-displays 22R and 22L, the sub-displays 22R and 22L will be collectively referred to as the sub-displays 22. The number of the meter display 20, the sub-displays 22, the multimedia display 24, and the head-up display 26 is not limited to the number of such displays illustrated in FIG. 1.

In the first embodiment, a case will be described in which a display screen relating to a change in the autonomous driving level is displayed on the meter display 20. The display that displays the display screen relating to a change in the autonomous driving level is not limited to the meter display 20, and may be at least one of the meter display 20, the sub-displays 22R and 22L, the multimedia display 24, and the head-up display 26.

As illustrated in FIG. 1, the meter display 20 is a liquid crystal display provided on a dashboard 15 in front of a driver seated in a seat. The display surface of the meter display 20 is disposed in an orientation to face the seat where the driver is seated (i.e., the driver's seat). The meter display 20 displays information related to the travel of the vehicle 12, such as vehicle speed, engine rotational speed, and mileage, as well as information related to the state of the vehicle 12, such as the operation status of warning lights and other lamps.

The sub-displays 22 are liquid crystal displays provided on the right and left sides of the meter display 20 in the vehicle width direction. The display surfaces of the sub-displays 22 are disposed to face the direction of the seat in which the driver is seated. The sub-displays 22 display, for example, information relating to driving assistance functions, information relating to multimedia such as music playback, and the like. The sub-displays 22 may be provided with a touch panel, and configured to enable operation of the driving assistance functions and multimedia operations such as music playback.

The multimedia display 24 is a liquid crystal display provided at the center of the dashboard 15 in the vehicle width direction. The multimedia display 24 displays an image relating to navigation, an image relating to audio, an image relating to vehicle peripheral information, and the like. The multimedia display 24 may be provided with a touch panel, and configured to enable various operations.

The head-up display 26 displays a projection screen on a windshield 16 that is projected from a projection device (not illustrated). The head-up display 26 is located above the meter display 20 in the vehicle. The head-up display 26 displays information of high priority that the driver is to be informed of, such as the vehicle speed and the travel direction of the vehicle 12.

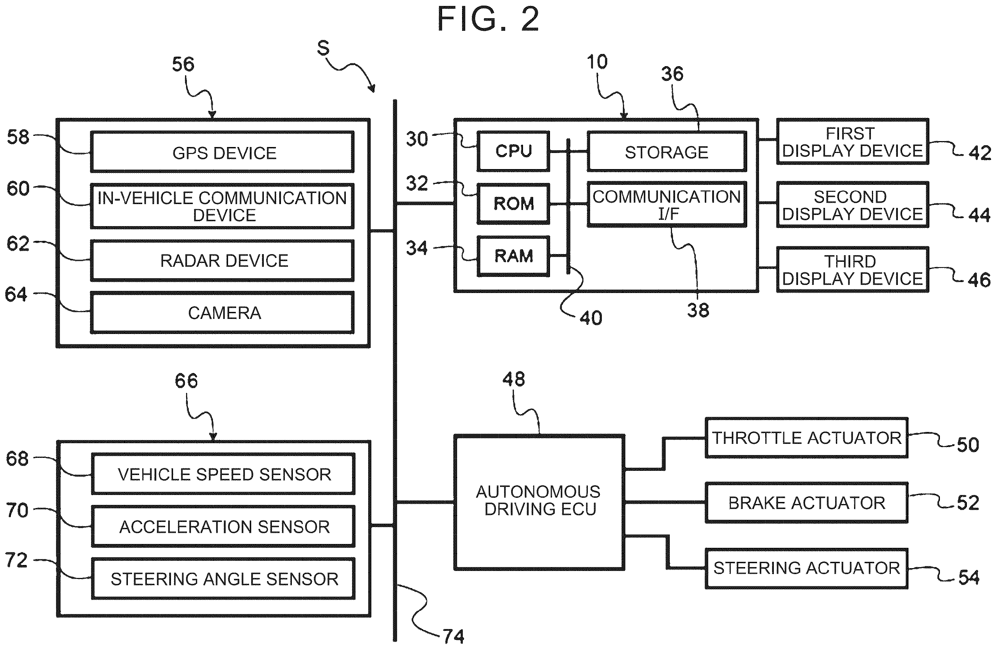

Next, the hardware configuration of the vehicle display system S will be described. As illustrated in FIG. 2, the vehicle display system S is configured to include a vehicle display control apparatus 10, a peripheral information acquisition sensor group 56, a vehicle information acquisition sensor group 66, and an autonomous driving ECU 48 that are communicatively connected through a communication bus 74. The vehicle display control apparatus 10 according to the present embodiment is, for example, a display control ECU (Electronic Control Unit) that performs various display controls.

The vehicle display control apparatus 10 includes a CPU (Central Processing Unit: processor) 30, a ROM (Read Only Memory) 32, a RAM (Random Access Memory) 34, a storage 36, and a communication interface (communication I/F) 38. The components are communicatively connected to each other via an internal bus 40.

The CPU 30 is a central processing unit that executes various programs and controls various parts. That is, the CPU 30 reads a program from the ROM 32 or the storage 36 and executes the program using the RAM 34 as a working area. Furthermore, the CPU 30 controls the above components and performs various arithmetic processes according to a program stored in the ROM 32 or the storage 36.

The ROM 32 stores various programs and various data. The RAM 34 serves as a working area for temporarily storing a program or data. The storage 36 is configured by a storage medium such as an eMMC (embedded Multi Media Card) or a UFS (Universal Flash Storage), and is a non-transitory storage medium that stores various programs including an operating system and various data. In the present embodiment, the ROM 32 or the storage 36 stores a display program for performing a display control process, etc.

The communication I/F 38 is an interface that allows the vehicle display control apparatus 10 to communicate with external servers and other devices, and uses a standard such as CAN (Controller Area Network), Ethernet (registered trademark), LTE (Long Term Evolution), FDDI (Fiber Distributed Data Interface), and Wi-Fi (registered trademark).

The vehicle display control apparatus 10 is connected to a first display device 42, a second display device 44, and a third display device 46. For example, the first display device 42 displays an image on the meter display 20 and the sub-displays 22. The second display device 44 displays an image on the multimedia display 24. The third display device 46 displays an image on the head-up display 26.

The peripheral information acquisition sensor group 56 includes a GPS (Global Positioning System) device 58, an in-vehicle communication device 60, a radar device 62, and a camera 64.

The GPS device 58 determines the position of the host vehicle by receiving GPS signals from a plurality of GPS satellites. The in-vehicle communication device 60 is a communication device that enables vehicle-to-vehicle communication with other vehicles, road-to-vehicle communication with roadside devices, and the like.

The radar device 62 is a sensor that detects objects such as pedestrians and other vehicles around the vehicle, and is configured to include a plurality of radar devices with different detection ranges. For example, the radar device 62 may be configured to include a LIDAR (Light Detection and Ranging) or the like. The radar device 62 may also be configured to acquire the relative position and the relative speed between a detected object and the host vehicle.

The camera 64 captures images of the surroundings of the vehicle and outputs the captured images. For example, the camera 64 includes a front camera that captures the area in front of the vehicle, a rear camera that captures the area in rear of the vehicle, and side cameras that captures the right and left sides of the vehicle.

The vehicle information acquisition sensor group 66 includes a vehicle speed sensor 68, an acceleration sensor 70, and a steering angle sensor 72. The vehicle speed sensor 68 directly or indirectly detects and outputs the speed of the vehicle. The acceleration sensor 70 directly or indirectly detects and outputs the acceleration of the vehicle. The steering angle sensor 72 directly or indirectly detects and outputs the steering angle of the vehicle.

The autonomous driving ECU 48 is a control unit that performs an autonomous driving process to allow the vehicle to travel autonomously without any driving operation by an occupant. The autonomous driving ECU 48 is electrically connected to a throttle actuator 50, a brake actuator 52, and a steering actuator 54.

The throttle actuator 50 is an actuator that changes the throttle opening of the vehicle. The brake actuator 52 is an actuator that changes the braking force generated by a braking device of the vehicle. The steering actuator 54 is an actuator that changes the amount of steering by a steering device of the vehicle.

Here, in the autonomous driving process by the autonomous driving ECU 48, the status of the vehicle and the surroundings of the vehicle is determined based on information obtained from the peripheral information acquisition sensor group 56 and the vehicle information acquisition sensor group 66, and the throttle actuator 50, the brake actuator 52, and the steering actuator 54 are controlled according to the status of the surroundings.

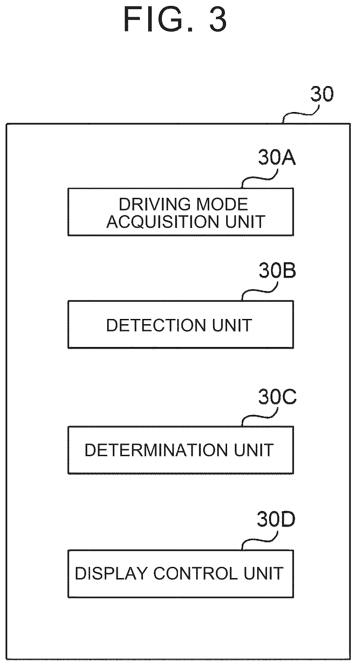

Next, the functional configuration of the vehicle display control apparatus 10 will be described. The vehicle display control apparatus 10 implements various functions using the above hardware resources. The functional configuration implemented by the vehicle display control apparatus 10 will be described with reference to FIG. 3.

As illustrated in FIG. 3, the vehicle display control apparatus 10 includes, as functional components, a driving mode acquisition unit 30A, a detection unit 30B, a determination unit 30C, and a display control unit 30D. Each functional component is implemented by the CPU 30 of the vehicle display control apparatus 10 reading and executing a program.

The driving mode acquisition unit 30A acquires whether the driving mode of the vehicle 12 is a manual driving mode or an autonomous driving mode. The vehicle 12 according to the present embodiment has, by way of example, a manual driving mode in which the driver performs all operations, and an autonomous driving mode in which at least some operations are performed automatically. The autonomous driving mode includes ACC, a driving assistance function that provides assistance for acceleration, deceleration, and steering only when the occupant is holding a steering wheel. The ACC is a driving assistance function that recognizes a vehicle ahead and assists in following the vehicle while maintaining a distance according to the vehicle speed. The autonomous driving mode also includes hands-off control, a driving assistance function that provides assistance for acceleration, deceleration, and steering as long as the occupant is paying attention to the area ahead of the vehicle, even when the occupant takes his/her hands off the steering wheel. The driving mode acquisition unit 30A acquires information about the driving mode based on a signal from the autonomous driving ECU 48, for example.

In the present embodiment, it is indicated that the autonomous driving level of the vehicle 12 is level 2.0 when the ACC driving assistance function is in operation, and it is indicated that the autonomous driving level of the vehicle 12 is level 2.5 when the hands-off control driving assistance function is in operation. The autonomous driving level is an example of a "driving assistance level".

The detection unit 30B detects whether an activation condition for activating the driving assistance function or a cancellation condition for canceling the driving assistance function is met. The detection unit 30B detects whether the condition for activating the hands-off control is met by acquiring a signal from the autonomous driving ECU 48, for example. In addition, the detection unit 30B detects whether the condition for canceling the hands-off control is met by acquiring a signal from the autonomous driving ECU 48.

Here, the autonomous driving ECU 48 acquires the detection results from the various sensors etc. that constitute the peripheral information acquisition sensor group 56 and the vehicle information acquisition sensor group 66 as various kinds of information that can be acquired by the vehicle 12. Then, the autonomous driving ECU 48 determines whether the conditions for activating and canceling the various driving assistance functions are met based on the acquired detection results relating to the traveling speed and the traveling lane of the vehicle 12, driving operations by the occupant, etc.

The autonomous driving ECU 48 determines that the condition for activating the hands-off control is met when the acquired detection results include the vehicle 12 traveling on a highway, a brake pedal not being depressed, the face of the driver being detected, the lanes being clear, and the vehicle not traveling along a sharp curve, for example. In addition, the autonomous driving ECU 48 determines that the condition for canceling the hands-off control is met when the acquired detection results include the line of sight of the driver being within a range where it is determined that the driver is gazing ahead and the driver performing a steering operation.

The determination unit 30C determines whether the autonomous driving level has been changed. Specifically, the determination unit 30C determines whether the autonomous driving level has been changed based on the detection result detected by the detection unit 30B. The determination unit 30C determines that the autonomous driving level has been raised when it is detected that the condition for activating the hands-off control is met while the ACC is in operation, for example. Furthermore, the determination unit 30C determines that the autonomous driving level has been lowered when it is detected that the condition for activating the hands-off control is not met and that the condition for canceling the hands-off control is met. The determination unit 30C may acquire whether the autonomous driving level has been changed based on a signal from the autonomous driving ECU 48.

The display control unit 30D displays peripheral information for the vehicle 12 in a display area provided in the vehicle cabin. Specifically, the display control unit 30D acquires signals from the peripheral information acquisition sensor group 56, and displays peripheral information for the vehicle 12 as seen from a virtual viewpoint in the display area based on the acquired signals. Here, the "virtual viewpoint" is a viewpoint set in a three-dimensional virtual space having the position of a host vehicle image indicating the host vehicle as the origin, and the virtual viewpoint is defined by predetermined viewpoint coordinates and viewpoint angle (orientation) in the virtual space. By way of example, the virtual viewpoint is a viewpoint with specific coordinates located above the host vehicle image in the virtual space, the viewpoint overlooking the vehicle 12 and the surroundings at a specific viewpoint angle.

In addition, when the autonomous driving level is changed, the display control unit 30D changes the background color of the display area and the mode of the host vehicle image to be displayed, to temporarily highlight a part of the display area. Here, the term "temporarily" refers to a short period of time during which the driver can make a visual recognition, and refers to a period of time ranging from about 0.5 seconds to 3 seconds, for example. Specifically, when the determination unit 30C determines that the autonomous driving level has been changed, the display control unit 30D changes at least a part of the background color of the display area of the vehicle 12 to a predetermined system color that indicates the driving level after being changed, changes the mode of the host vehicle image displayed in the display area, and temporarily displays a part of the display area in a brighter predetermined system color.

For example, when the autonomous driving level is changed from level 2.0 to level 2.5, the display control unit 30D changes a part of the background color of the meter display 20 to a bluish color and changes the host vehicle image to a host vehicle image corresponding to level 2.5. Then, the display control unit 30D temporarily displays the area at the upper part of the meter display 20 brightly in a bluish color to highlight such an area.

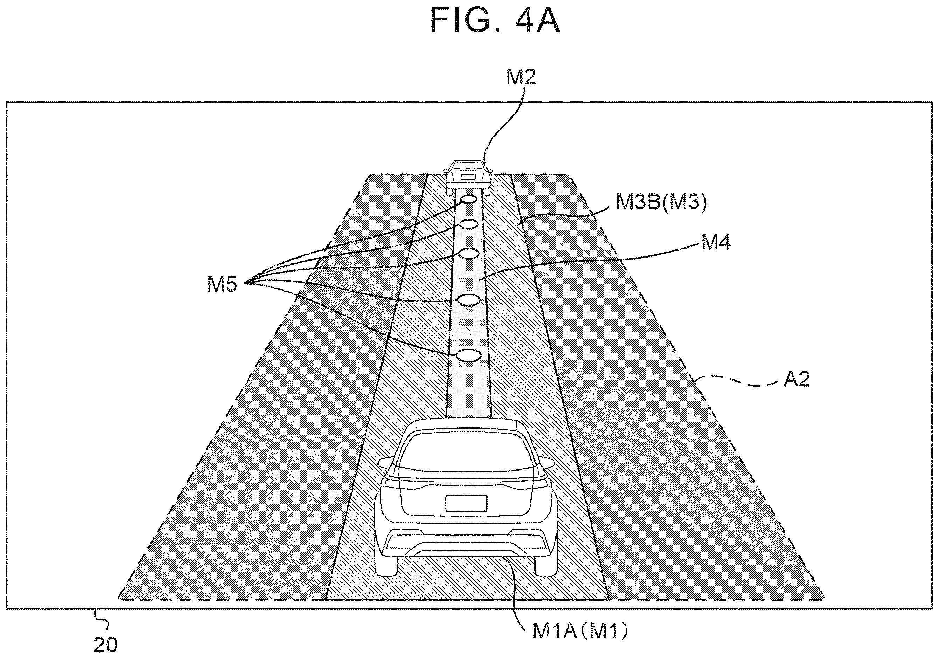

Next, display screens to be displayed in the display area of the vehicle 12 when the autonomous driving level is changed will be described with reference to FIGS. 4A to 6. The display screen according to the first embodiment is a display screen to be displayed on the meter display 20. In the first embodiment, in order to indicate that the autonomous driving level of the vehicle 12 is level 2.0, the background color of at least a part of the meter display 20 is a greenish color, and a host vehicle image corresponding to level 2.0 is displayed. In addition, in order to indicate that the autonomous driving level of the vehicle 12 is level 2.5, the background color of at least a part of the meter display 20 is a bluish color, and a host vehicle image corresponding to level 2.5 is displayed. Regarding the following description, for the sake of convenience, only a part of the information displayed on the meter display 20 is illustrated in the drawings and is explained. Furthermore, the term "up-down direction" refers to the up-down direction of the display area, and the term "right-left direction" refers to the right-left direction of the display area.

FIG. 4A illustrates an example of a display screen that is displayed when the condition for activating the hands-off control according to the first embodiment is met. FIG. 4A illustrates a display screen that is displayed when the condition for activating the hands-off control is met while the ACC is in operation, by way of example.

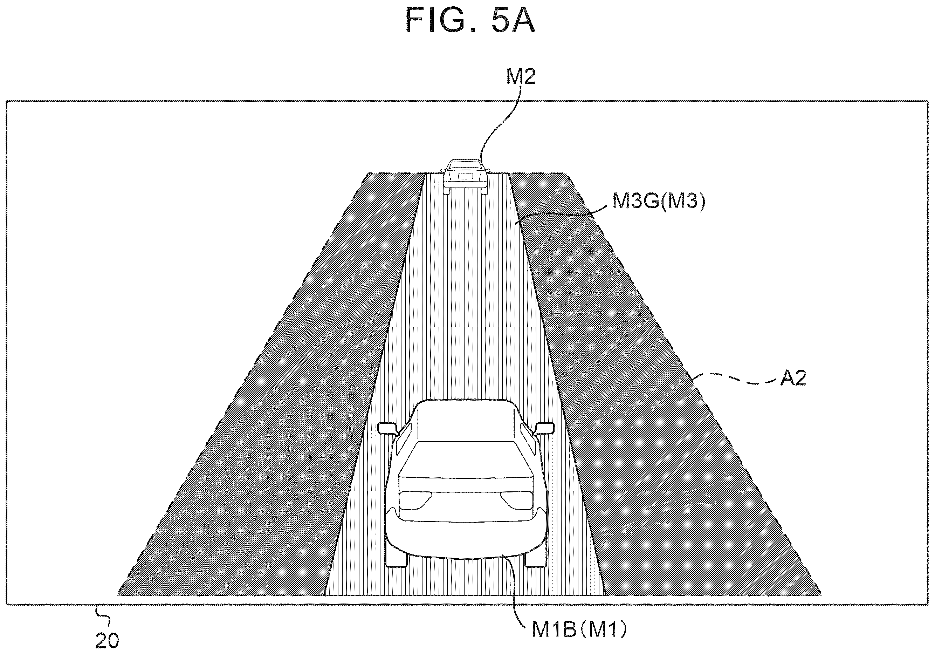

As illustrated in FIG. 4A, the display screen of the meter display 20 displays a host vehicle image M1A, a preceding vehicle image M2, a lane image M3B, a trajectory image M4, and speed marks M5. The host vehicle image M1 according to the present embodiment includes a host vehicle image M1A and a host vehicle image M1B (see FIG. 5A, etc.) that have different shapes. The lane image M3 according to the present embodiment also includes a lane image M3B and a lane image M3G (see FIG. 5A, etc.) that are displayed with different colors (hue, brightness, saturation, etc.). An area A2 surrounded by broken lines and not displayed on the meter display 20 indicates the area surrounding the lane image M3. Hereinafter, when there is no need to distinguish between the host vehicle images M1A and M1B, the host vehicle images M1A and M1B will be collectively referred to as the host vehicle image M1. Furthermore, when there is no need to distinguish between the lane images M3B and M3G, the lane images M3B and M3G will be collectively referred to as the lane image M3.

The area A2 is a trapezoidal area that includes the area where the lane image M3 is displayed. The area A2 illustrated in FIG. 4A is displayed in a bluish color, by way of example. For example, the area of the area A2 other than the lane image M3B is displayed in blue. The area A2 is not limited to a trapezoidal area, and may be an area of any shape. The bluish color is an example of a "first system color".

The host vehicle image M1 is an image that simulates the host vehicle. The host vehicle image M1 is displayed at the lower part of the display area as superimposed on the lane image M3. The host vehicle image M1A illustrated in FIG. 4A is an image that represents a vehicle that is at least partially different in appearance from the actual vehicle 12. The host vehicle image M1A is an image that represents a vehicle with a design that evokes a multifunctional vehicle, for example, in comparison with the host vehicle image M1B described later.

The preceding vehicle image M2 is an image that simulates a preceding vehicle. The preceding vehicle image M2 is displayed as superimposed on the lane image M3. The display position and size of the preceding vehicle image M2 are changed according to the relative positional relationship between the vehicle 12 and the preceding vehicle, and the changed preceding vehicle image M2 is displayed. For example, as the vehicle 12 and the preceding vehicle become farther in relative position from each other, the preceding vehicle image M2 is displayed in a smaller size at a higher position in the display unit. In other words, the preceding vehicle image M2 is displayed as if the preceding vehicle is traveling on the lane image M3, simulating the traveling state of the preceding vehicle.

The lane image M3 is an image that simulates the lane on which the host vehicle is traveling. The lane image M3 is displayed as superimposed on the host vehicle image M1, the preceding vehicle image M2, and the trajectory image M4. The lane image M3B illustrated in FIG. 4A is displayed as a light blue trapezoidal image, by way of example.

The trajectory image M4 is displayed in a substantially strip-like shape, and displayed in a substantially straight shape in the up-down direction when the vehicle 12 is traveling straight. Although not illustrated, when the vehicle 12 turns right or left or travels along a curve, the trajectory image M4 is displayed in the state of being curved along an expected travel route of the vehicle 12. The trajectory image M4 illustrated in FIG. 4A is displayed in bright light blue, by way of example.

A plurality of speed marks M5 is displayed at intervals as superimposed on the trajectory image M4, and five speed marks M5 are displayed in FIG. 4A. The speed marks M5 are displayed at intervals that vary according to the speed of the vehicle 12. For example, when the speed of the vehicle 12 is lower than that in the state in FIG. 4A, the speed marks M5 are displayed at shorter intervals. Conversely, when the speed of the vehicle 12 is higher than that in the state in FIG. 4A, the speed marks M5 are displayed at longer intervals. The speed marks M5 in the present embodiment are each displayed as a white circular image.

In this way, the host vehicle image M1A, the lane image M3B, the trajectory image M4, and the speed marks M5 are displayed, and the area of the area A2 other than the lane image M3B is displayed in blue, indicating that the condition for activating the hands-off control has been met. That is, the display described above indicates that the autonomous driving level of the vehicle 12 is level 2.5. In the present embodiment, a bluish color indicates that the autonomous driving level of the vehicle 12 is level 2.5.

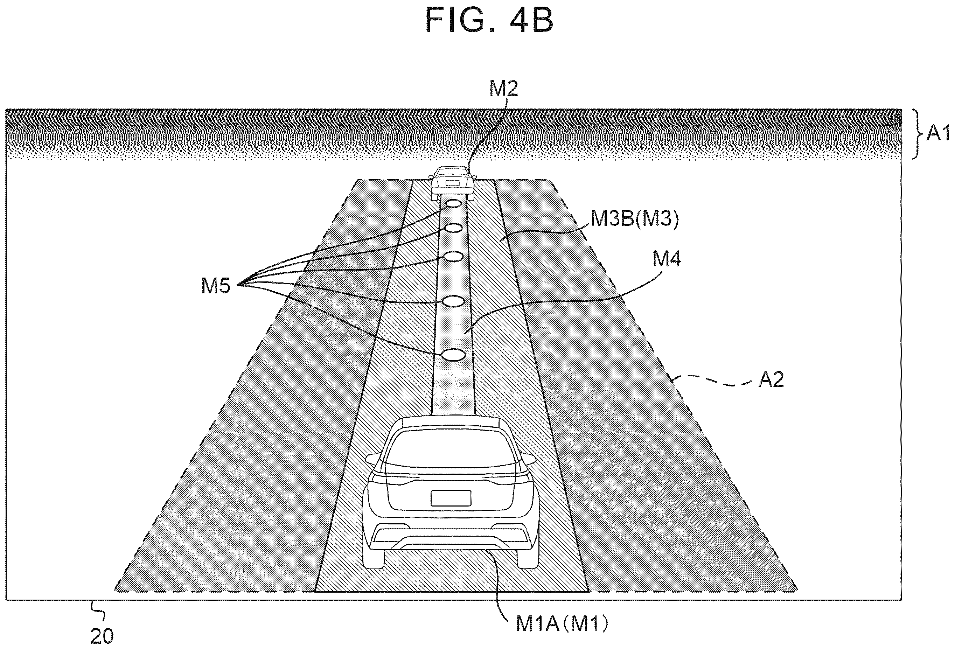

Next, a display screen of the meter display 20 that is displayed after the display screen illustrated in FIG. 4A and that makes the occupant aware that the autonomous driving level has been changed will be described with reference to FIG. 4B. In the present embodiment, in order to indicate that the autonomous driving level of the vehicle 12 has reached level 2.5, the background color of a part of the meter display 20 is temporarily displayed brightly in a bluish color. The differences from FIG. 4A will be described below. The other configurations are the same as those in FIG. 4A, and will not be described in detail.

FIG. 4B illustrates an example of a display screen that is displayed to indicate that the condition for activating the hands-off control according to the first embodiment is met. The display screen illustrated in FIG. 4B is temporarily displayed after the display screen illustrated in FIG. 4A is displayed, by way of example.

An area A1 illustrated in FIG. 4B is a rectangular area that has a width of about 1/8 in the up-down direction from the upper end of the meter display 20 and extends across the entire meter display 20 in the right-left direction. The area A1 is displayed in a gradation of light blue, with the color becoming thicker toward the upper side. This display in a gradation of light blue in the area A1 is displayed brightly for a predetermined period of time and then turned off. The area A1 is not limited to a rectangular area at the upper part of the meter display 20, and may be an area of any shape and at any position.

In this way, the display in a gradation of light blue in the area A1 at the upper part of the meter display 20 is temporarily displayed brightly, indicating that the condition for activating the hands-off control has been met. That is, the display described above indicates that the autonomous driving level of the vehicle 12 has been changed to level 2.5.

FIG. 5A illustrates an example of a display screen that is displayed while the ACC according to the first embodiment is in operation. FIG. 5A illustrates a display screen that is displayed when the ACC is in operation but the condition for activating the hands-off control is not met, by way of example. The differences from FIG. 4A will be described below. The other configurations are the same as those in FIG. 4A, and will not be described in detail.

As illustrated in FIG. 5A, the display screen of the meter display 20 displays a host vehicle image M1B, a preceding vehicle image M2, and a lane image M3G.

The area A2 illustrated in FIG. 5A is displayed in a greenish color, by way of example. For example, the area of the area A2 other than the lane image M3G is displayed in green.

The host vehicle image M1B illustrated in FIG. 5A is an image that represents a vehicle that is at least partially different in appearance from the actual vehicle 12. The host vehicle image M1B is an image that represents a vehicle with a design that evokes a vehicle with fewer functions than the host vehicle image M1A, for example.

The lane image M3G illustrated in FIG. 5A is displayed as a light green trapezoidal image, by way of example.

In this way, the host vehicle image M1B and the lane image M3G are displayed, and the area of the area A2 other than the lane image M3G is displayed in green, indicating that the ACC is in operation. That is, the display described above indicates that the autonomous driving level of the vehicle 12 is level 2.0. In the present embodiment, a greenish color indicates that the autonomous driving level of the vehicle 12 is level 2.0.

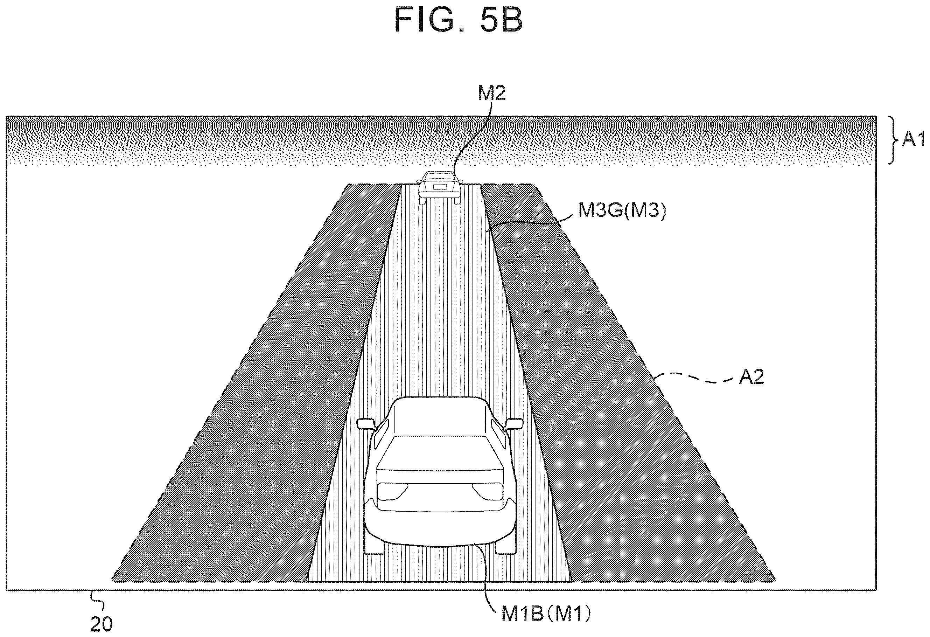

Next, a display screen of the meter display 20 that is displayed after the display screen illustrated in FIG. 5A and that makes the occupant aware that the autonomous driving level has been changed will be described with reference to FIG. 5B. In the present embodiment, in order to indicate that the autonomous driving level of the vehicle 12 has reached level 2.0, the background color of a part of the meter display 20 is temporarily displayed brightly in a greenish color. The differences from FIG. 5A will be described below. The other configurations are the same as those in FIG. 5A, and will not be described in detail.

FIG. 5B illustrates an example of a display screen that is displayed to indicate that the ACC according to the first embodiment is in operation. The display screen illustrated in FIG. 5B is temporarily displayed after the display screen illustrated in FIG. 5A is displayed, by way of example.

The area A1 illustrated in FIG. 5B is displayed in a gradation of green, with the color becoming thicker toward the upper side. This display in a gradation of green in the area A1 is displayed brightly for a predetermined period of time and then turned off.

In this way, the display in a gradation of green in the area A1 at the upper part of the meter display 20 is temporarily displayed brightly, indicating that the ACC has been activated. That is, the display described above indicates that the autonomous driving level of the vehicle 12 has been changed to level 2.0.

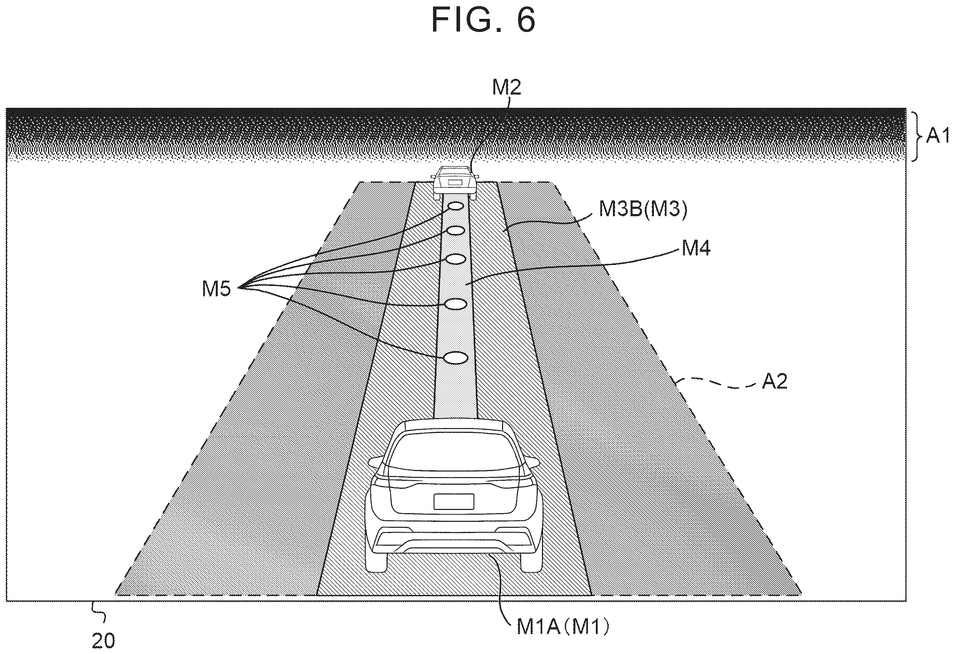

Next, a display screen of the meter display 20 for making the occupant aware that the conditions for canceling the hands-off control is not met will be described with reference to FIG. 6. The display screen illustrated in FIG. 6 is displayed when the condition for activating the hands-off control is not met and the condition for canceling the hands-off control also is not met while the hands-off control is in operation, by way of example. In other words, the display screen illustrated in FIG. 6 is a display screen that is displayed when the hands-off control cannot be canceled. In the present embodiment, in order to indicate that the hands-off control cannot be canceled, the background color of a part of the meter display 20 is temporarily displayed brightly in an orangish color. The differences from FIG. 4B will be described below. The other configurations are the same as those in FIG. 4B, and will not be described in detail. The condition for canceling the hands-off control is an example of a "predetermined condition". The orangish color is an example of a "third system color".

FIG. 6 illustrates an example of a display screen that is displayed when the condition for canceling the hands-off control according to the first embodiment is not met.

The area A2 illustrated in FIG. 6 is displayed in a bluish color, by way of example. The area A1 is displayed in a gradation of orange, with the color becoming thicker toward the upper side. This display in a gradation of orange in the area A1 is displayed brightly for a predetermined period of time and then turned off. The bluish color is an example of a "second system color".

In this way, the display in a gradation of orange in the area A1 at the upper part of the meter display 20 is temporarily displayed brightly, indicating that a condition for lowering the autonomous driving level is not met. Specifically, the area A2 is displayed in a bluish color indicating that the autonomous driving level is level 2.5, and the area A1 is temporarily displayed brightly in a gradation of orange, indicating that the condition for canceling the hands-off control is not met. That is, the display described above indicates that the autonomous driving level of the vehicle 12 cannot be changed from level 2.5 to level 2.0. In the present embodiment, an orangish color indicates that a warning about the autonomous driving of the vehicle 12 has been issued.

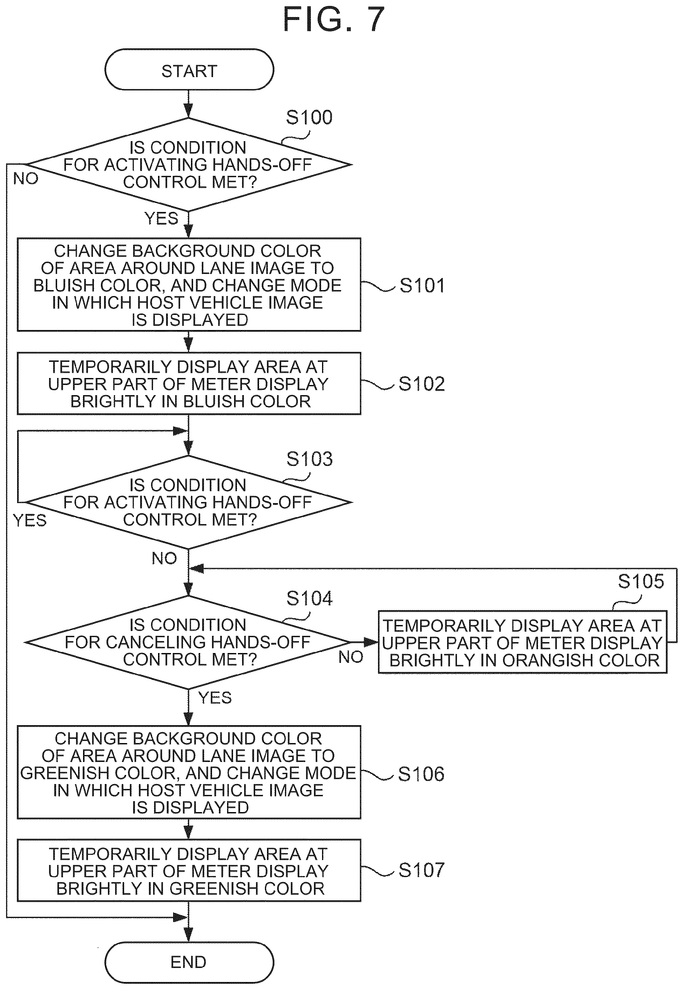

Next, the display control process performed when the autonomous driving level is changed will be described with reference to FIG. 7. FIG. 7 is a flowchart illustrating an example of the flow of the display control process according to the first embodiment. The display control process is repeatedly executed at a predetermined cycle while the ACC is in operation, by way of example. The display screen illustrated in FIG. 5A is displayed on the meter display 20 until it is determined that the condition for activating the hands-off control is met. Furthermore, the display control process may be terminated at any time when the ACC is deactivated.

In step S100 in FIG. 7, the CPU 30 determines whether the condition for activating the hands-off control is met. Specifically, the CPU 30 determines whether the condition for activating the hands-off control is met by detecting a signal acquired from the autonomous driving ECU 48. When the CPU 30 determines that the condition for activating the hands-off control is met (step S100: YES), the CPU 30 proceeds to step S101. On the other hand, when the CPU 30 determines that the condition for activating the hands-off control is not met (step S100: NO), the CPU 30 ends the display control process.

In step S101, the CPU 30 changes the background color of the area around the lane image M3 to a bluish color, and changes the mode in which the host vehicle image M1 is displayed. By way of example, the CPU 30 changes the display screen of the meter display 20 from the display screen illustrated in FIG. 5A to the display screen illustrated in FIG. 4A. Specifically, the CPU 30 changes the lane image M3G in light green to the lane image M3B in light blue. Furthermore, the CPU 30 changes the color of the area A2 other than the lane image M3 from green to blue and displays the changed area A2. Then, the CPU 30 changes the host vehicle image M1B to the host vehicle image M1A.

In step S102 in FIG. 7, the CPU 30 temporarily displays the area A1 at the upper part of the meter display 20 brightly in a bluish color. By way of example, the CPU 30 temporarily displays the area A1 brightly in a gradation of light blue (see FIG. 4B).

In step S103, the CPU 30 determines whether the condition for activating the hands-off control is met. Specifically, the CPU 30 determines whether the condition for activating the hands-off control is met by detecting a signal acquired from the autonomous driving ECU 48. When the CPU 30 determines that the condition for activating the hands-off control is met (step S103: YES), the CPU 30 repeatedly makes the determination in step S103. That is, the CPU 30 maintains the hands-off state until the condition for activating the hands-off control is no longer met. When the CPU 30 determines that the condition for activating the hands-off control is not met (step S103: NO), the CPU 30 proceeds to step S104.

In step S104, the CPU 30 determines whether the condition for canceling the hands-off control is met. Specifically, the CPU 30 determines whether the condition for canceling the hands-off control is met by detecting a signal acquired from the autonomous driving ECU 48. When the CPU 30 determines that the condition for canceling the hands-off control is not met (step S104: NO), the CPU 30 proceeds to step S105. When the CPU 30 determines that the condition for canceling the hands-off control is met (step S104: YES), the CPU 30 proceeds to step S106.

In step S105, the CPU 30 temporarily displays the area A1 at the upper part of the meter display 20 brightly in an orangish color. By way of example, the CPU 30 temporarily displays the area A1 brightly in a gradation of orange (see FIG. 6). Then, the CPU 30 returns to step S104. The CPU 30 executes step S105 at predetermined time intervals until the condition for canceling the hands-off control is met. Furthermore, the CPU 30 may gradually strengthen the notification to the occupant when the condition for canceling the hands-off control is not met. For example, as the time period during which the condition for canceling the hands-off control is not met increases, the CPU 30 issues a warning sound and takes compulsory measures such as making an emergency stop on the shoulder of a road.

In step S106, the CPU 30 changes the background color of the area around the lane image M3 to a greenish color, changes the mode of the host vehicle image M1, and displays the changed mode. By way of example, the CPU 30 changes the display screen of the meter display 20 from the display screen illustrated in FIG. 4A to the display screen illustrated in FIG. 5A and displays the changed display screen. Specifically, the CPU 30 changes the lane image M3B in light blue to the lane image M3G in light green and displays the changed lane image M3B. Furthermore, the CPU 30 changes the color of the area A2 other than the lane image M3 from blue to green and displays the changed area A2. Then, the CPU 30 changes the host vehicle image M1A to the host vehicle image M1B and displays the changed host vehicle image.

In step S107 in FIG. 7, the CPU 30 temporarily displays the area A1 at the upper part of the meter display 20 brightly in a greenish color. By way of example, the CPU 30 temporarily displays the area A1 brightly in a gradation of green (see FIG. 5B). Then, the CPU 30 ends the display control process.

Next, a summary of the first embodiment will be described. When the autonomous driving level of the vehicle 12 is changed, the vehicle display control apparatus 10 according to the first exemplary embodiment changes the background color of the area A2 of the meter display 20 provided in the vehicle 12 to a system color corresponding to the autonomous driving level after being changed, and displays the area A1 in a predetermined system color to highlight such an area. Therefore, with the vehicle display control apparatus 10 according to the present embodiment, it is possible to make the occupant aware of a change in the autonomous driving level as the driving assistance level.

When the condition for activating the hands-off control is met, the vehicle display control apparatus 10 according to the first embodiment changes the background color of the area A2 to a bluish color, and temporarily displays the area A1 brightly in a bluish color. Therefore, with the vehicle display control apparatus 10 according to the present embodiment, the background color of a part of the meter display 20 is changed to a bluish color, and a part of the meter display 20 is temporarily displayed brightly in a bluish color, enabling to make the occupant aware that the autonomous driving level has been changed to level 2.5.

When the condition for activating the hands-off control is no longer met, the vehicle display control apparatus 10 according to the first exemplary embodiment displays the background color of the area A2 in a bluish color and temporarily displays the area A1 brightly in an orangish color until the condition for canceling the hands-off control is met. Therefore, with the vehicle display control apparatus 10 according to the present embodiment, it is possible to make the occupant aware that the autonomous driving level cannot be lowered to 2.0, and to prompt the occupant to perform an operation to lower the autonomous driving level.

When the autonomous driving level of the vehicle 12 is changed, the vehicle display control apparatus 10 according to the first embodiment changes the mode in which the host vehicle image M1 is displayed on the meter display 20 and displays the changed mode. Therefore, with the vehicle display control apparatus 10 according to the present embodiment, it is possible to make the occupant aware of the change in the autonomous driving level by the change in the display of the host vehicle image M1, in addition to the change in the background color of the area A2.

Next, modifications of the first embodiment will be described. In the first embodiment, a case has been described in which display relating to a change in the autonomous driving level is displayed on the meter display 20. In a modification of the first embodiment, display relating to a change in the autonomous driving level is further displayed on the sub-displays 22. The content peculiar to the modification of the first embodiment will be described below. The other configurations are the same as those in the first embodiment, and will not be described in detail. Regarding the following description, for the sake of convenience, only a part of the information displayed on the sub-displays 22 is illustrated in the drawings. The meter display 20 is an example of a "first display area". The sub-displays 22 are an example of a "second display area".

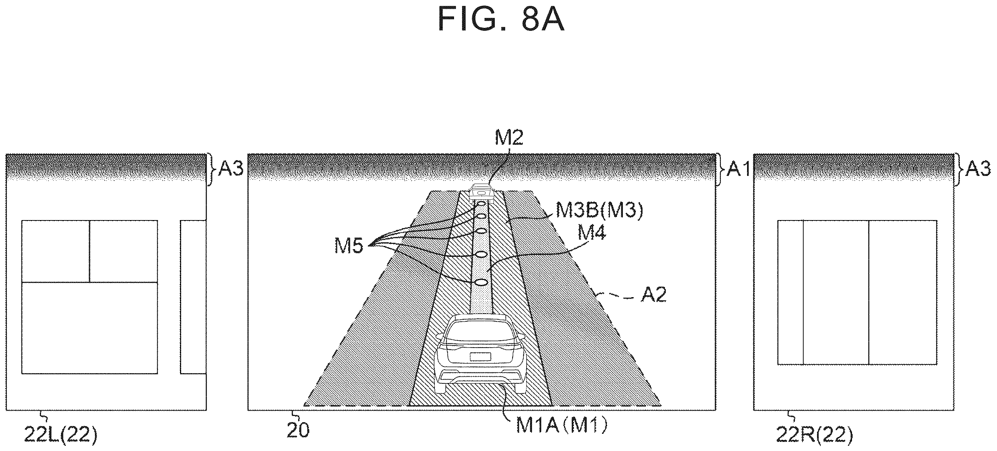

FIG. 8A is a diagram illustrating an example of a display screen of the meter display 20 and the sub-displays 22 according to the modification of the first embodiment. FIG. 8A illustrates a display screen displayed to indicate that the condition for activating the hands-off control is met.

The area A1 of the meter display 20 illustrated in FIG. 8A is displayed in a gradation of light blue, with the color becoming thicker toward the upper side. The display screen of the meter display 20 in FIG. 8A is the same as that in FIG. 4B described above, and therefore will not be described in detail.

An area A3 of each of the sub-displays 22 illustrated in FIG. 8A is a rectangular area that has a width of about 1/8 in the up-down direction from the upper end of the sub-display 22 and extends across the entire sub-display 22 in the right-left direction. The area A3 is displayed in a gradation of light blue, with the color becoming thicker toward the upper side. This display in a gradation of light blue in the area A3 is displayed brightly for a predetermined period of time and then turned off. The area A3 is not limited to a rectangular area at the upper part of the sub-displays 22, and may be an area of any shape and at any position.

In this way, the display in a gradation of light blue in the area A1 of the meter display 20 and the area A3 of the sub-displays 22 is temporarily displayed brightly, indicating that the condition for activating the hands-off control has been met. Furthermore, the display in a gradation of light blue in the area A1 of the meter display 20 and the area A3 of the sub-displays 22 is temporarily displayed brightly, allowing the display in a gradation of light blue to be displayed over a wider area than in the first embodiment. Therefore, with the vehicle display control apparatus 10 according to the present embodiment, it is possible to make the occupant more aware of a change in the autonomous driving level.

In the modification described above, a case has been described in which the display in a gradation of light blue is displayed on the meter display 20 and the sub-displays 22. However, this is not limiting, and the display in a gradation of light blue may be displayed on a combination of at least two or more of the meter display 20, the sub-displays 22R and 22L, the multimedia display 24, and the head-up display 26. Furthermore, the display is not limited to a gradation of light blue, and the display may be in any color.

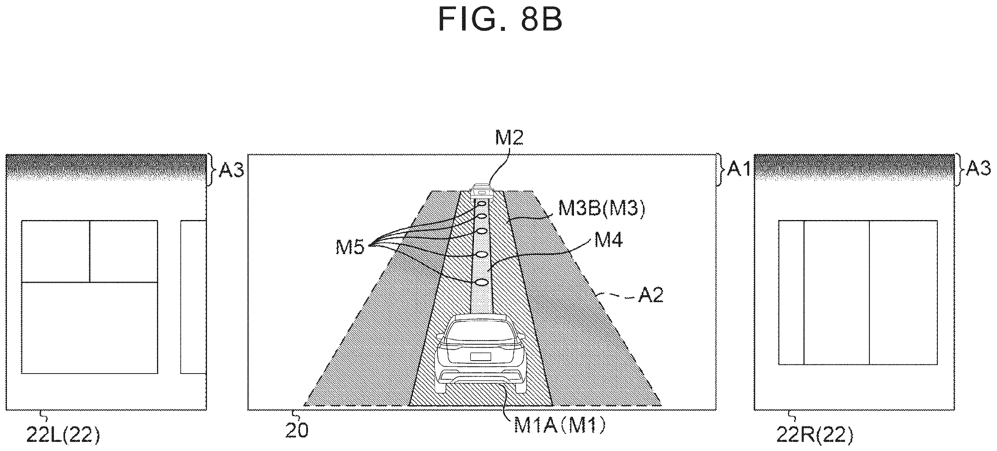

For example, as illustrated in FIG. 8B, the display in a gradation of light blue may be temporarily displayed brightly only in the area A3 of the sub-displays 22 as a display screen to indicate that the condition for activating the hands-off control is met. In the display screen illustrated in FIG. 8B, no gradation is displayed in the area A1 of the meter display 20, unlike the display screen illustrated in FIG. 8A. Therefore, with the vehicle display control apparatus 10 according to the present embodiment, when the direction of the line of sight of the driver is shifted from the front in the right-left direction, it is possible to make the occupant more aware of a change in the autonomous driving level.

Next, a second embodiment of the present disclosure will be described. In the first embodiment, it was explained that; when the condition for activating the hands-off control is met, the background color of the area A2 of the meter display 20 is changed to a bluish color, and then the area A1 is temporarily displayed brightly in a bluish color. In the second embodiment, it is explained that; when the condition for activating the hands-off control is met, the background color of the area A2 is left to remain green, and the area A1 is temporarily displayed brightly in a bluish color. The content peculiar to the second embodiment will be described below. The other configurations are the same as those in the embodiment described above, and will not be described in detail.

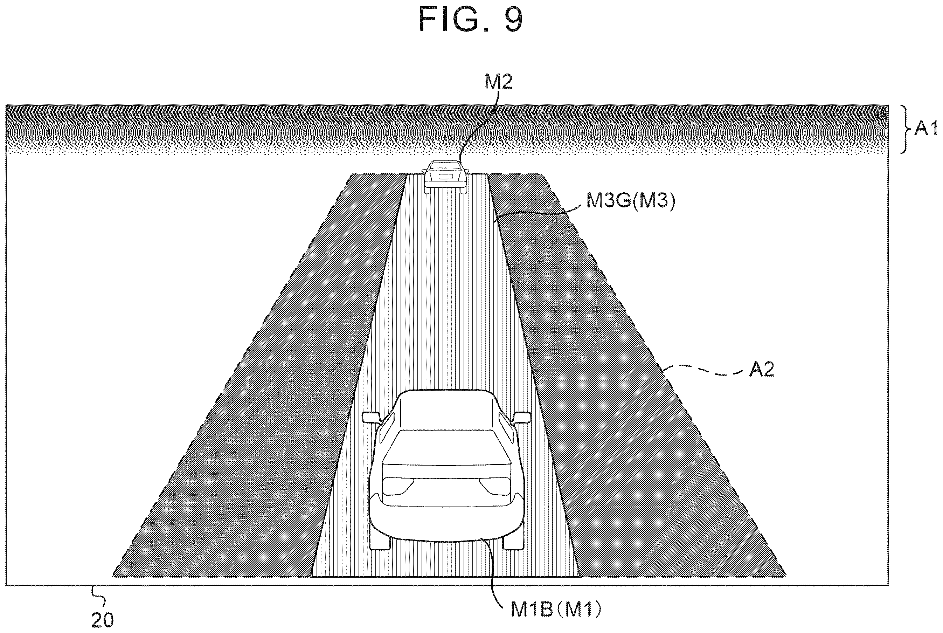

FIG. 9 illustrates an example of a display screen that is displayed when the condition for activating the hands-off control according to the second embodiment is met. FIG. 9 illustrates a display screen that is displayed when the condition for activating the hands-off control is met while the ACC is in operation, by way of example.

The display screen illustrated in FIG. 9 is a display screen of the meter display 20 for making the occupant aware that the autonomous driving level has been changed, displayed after the display screen illustrated in FIG. 5A. The differences from FIG. 5A will be described below. The other configurations are the same as those in FIG. 5A, and will not be described in detail.

The area A1 illustrated in FIG. 9 is displayed in a gradation of light blue, with the color becoming thicker toward the upper side. This display in a gradation of light blue in the area A1 is displayed brightly for a predetermined period of time and then turned off. Then, after the display screen illustrated in FIG. 9 is displayed, the display screen illustrated in FIG. 4A is displayed. After the display screen illustrated in FIG. 9 is displayed, the display screen illustrated in FIG. 4B may be displayed.

In this way, the host vehicle image M1B and the lane image M3G are displayed, the area of the area A2 other than the lane image M3G is displayed in green, and the display in a gradation of light blue is temporarily displayed brightly in the area A1, indicating that the condition for activating the hands-off control is met when the ACC is in operation. That is, the display described above indicates that the autonomous driving level of the vehicle 12 has been changed to level 2.5.

When the condition for activating the hands-off control is met and the hands-off control is enabled while the ACC is in operation, the vehicle display control apparatus 10 according to the second embodiment keeps the background color of the area A2 displayed in a greenish color until it is displayed in a bluish color, and temporarily displays the area A1 brightly in a bluish color. Therefore, with the vehicle display control apparatus 10 according to the present embodiment, the system color displayed in the area A2 and the system color in the area A1 are temporarily different from each other, enabling to make the occupant aware that the autonomous driving level of the vehicle 12 has been changed.

The vehicle display control apparatus 10 according to the second embodiment displays the display screen described above when the condition for activating the hands-off control is met while the ACC is in operation. However, this is not limiting, and the vehicle display control apparatus 10 according to the present embodiment may display the display screen described above when it is predicted that the condition for activating the hands-off control will be met while the ACC is in operation. Specifically, the vehicle display control apparatus 10 displays the display screen described above when it is predicted that the autonomous driving level of the vehicle 12 will be changed based on the detection results from the various sensors etc. that constitute the peripheral information acquisition sensor group 56 and the vehicle information acquisition sensor group 66 of the vehicle 12. For example, when it is detected while the vehicle 12 is traveling along a sharp curve on a highway that the road beyond the curve is substantially straight, the vehicle display control apparatus 10 displays the display screen described above (see FIG. 9). Then, after passing through the sharp curve, the vehicle display control apparatus 10 displays a display screen indicating that the autonomous driving level has been changed (see FIG. 4A) when the condition for activation is actually met. Therefore, with the vehicle display control apparatus 10 according to the present embodiment, it is possible to make the occupant aware that the autonomous driving level of the vehicle 12 may be changed.

Next, other embodiments of the present disclosure will be described. The vehicle display control apparatus 10 according to the first and second embodiments described above displays the display screen described above when the autonomous driving level of the vehicle 12 transitions between level 2.0 and level 2.5. However, this is not limiting, and the vehicle display control apparatus 10 according to the present embodiment may display a display screen that makes the occupant aware of a change in the autonomous driving level at any timing when the autonomous driving level of the vehicle 12 is changed, regardless of the level to which the autonomous driving level is changed. For example, the vehicle display control apparatus 10 displays a display screen that makes the occupant aware of a change in the autonomous driving level when the condition for activating the hands-off control is met during a manual operation, when the condition for activating the ACC is met during a manual operation, or the like.

The vehicle display control apparatus 10 according to the first and second embodiments displays the display screen described above when the autonomous driving level of the vehicle 12 is changed. However, this is not limiting, and the vehicle display control apparatus 10 according to the first and second embodiments may display the display screen described above when it is determined that the occupant is unaware that the autonomous driving level has been changed. For example, the vehicle display control apparatus 10 displays the display screen described above when the condition for activating the hands-off control is met and the occupant seated in the driver's seat continues to hold the steering wheel. With the vehicle display control apparatus 10 according to the first embodiment, it is possible to make an occupant that is unaware of a change in the autonomous driving level aware of the change in the autonomous driving level.

Furthermore, the configuration of the vehicle display control apparatus 10 described in the first and second embodiments is merely an example, and may be changed according to the situation without departing from the spirit and scope of the invention. Furthermore, the processing flow of the program described in the above embodiments is also an example, and unnecessary steps may be deleted, new steps may be added, or the processing order may be rearranged within the spirit and scope of the invention. Furthermore, the modes of the warning display of the above embodiments are merely examples, and may be freely combined within the spirit and scope of the invention.

The processes that executed by the CPU by reading software (programs) in the above embodiments may be executed by various processors other than the CPU. Examples of the processors in this case include programmable logic devices (PLDs) in which the circuit configuration can be changed after manufacturing, such as field-programmable gate arrays (FPGAs), and dedicated electric circuits that are processors having a circuit configuration specially designed to execute specific processing, such as application-specific integrated circuits (ASICs).

Furthermore, although it was explained that while the information processing program is stored (installed) in advance in the storage in the above embodiments, this is not limiting. The program may be provided in the form of being stored in a storage medium such as a CD-ROM (Compact Disc Read Only Memory), a DVD-ROM (Digital Versatile Disc Read Only Memory), or a USB (Universal Serial Bus) memory. The program may also be in the form of being downloaded from an external device via a network. The present disclosure is also applicable to a program and a program product.

## Claims

1. A vehicle display control apparatus (10) comprising
a display control unit (30D) configured to, when a driving assistance level of a vehicle (12) is changed, change a background color of a part of a display area (20, 22) provided in the vehicle (12) to a first system color that indicates the driving assistance level after being changed, and display at least a part of the display area (20, 22) in a predetermined system color to temporarily highlight the at least part of the display area (20, 22).

2. The vehicle display control apparatus (10) according to claim 1, wherein the display control unit (30D) is configured to, when the driving assistance level is changed, change the background color of the part of the display area (20, 22) to the first system color, and display the part of the display area (20, 22) in the first system color to temporarily highlight the part of the display area (20, 22).

3. The vehicle display control apparatus (10) according to claim 1, wherein:
the display control unit (30D) is configured to, when the driving assistance level is changed, display the background color of the display area (20, 22) in a second system color that indicates the driving assistance level before being changed, until the background color of the part of the display area (20, 22) is changed to the first system color; and
the display control unit (30D) is configured to display the part of the display area (20, 22) in the first system color to temporarily highlight the part of the display area (20, 22).

4. The vehicle display control apparatus (10) according to any one of claims 1 to 3, wherein:
the display control unit (30D) is configured to, when a predetermined condition for lowering the driving assistance level is not met when the driving assistance level is to be lowered, display the background color of the part of the display area (20, 22) in a second system color that indicates the driving assistance level before being lowered until the predetermined condition is met; and
the display control unit (30D) is configured to display the part of the display area (20, 22) in a third system color that is different from the first system color and the second system color to temporarily highlight the part of the display area (20, 22).

5. The vehicle display control apparatus (10) according to claim 4, wherein the predetermined condition is a condition for canceling hands-off control that is a driving assistance function that provides assistance for acceleration, deceleration, and steering as long as an occupant is paying attention to an area ahead of the vehicle (12), even when the occupant takes the occupant's hands off a steering wheel of the vehicle (12).

6. The vehicle display control apparatus (10) according to claim 1, wherein the display control unit (30D) is configured to, when the driving assistance level is changed, change a display mode of a host vehicle image (M1) indicating the vehicle (12) and displayed in the display area (20, 22).

7. The vehicle display control apparatus (10) according to any one of claims 1 to 6, wherein:
the display area (20, 22) includes a first display area (20) whose display surface is disposed in an orientation to face a driver's seat of the vehicle (12), and a second display area (22) located in a right-left direction of the first display area (20) and whose display surface is disposed in a direction of the driver's seat; and
the display control unit (30D) is configured to display a part of at least one of the first display area (20) and the second display area (22) in a predetermined system color to temporarily highlight the part of the at least one of the first display area (20) and the second display area (22).

8. A vehicle display control method executed by a computer, the vehicle display control method comprising, when a driving assistance level of a vehicle (12) is changed, (i) changing a background color of a part of a display area (20, 22) provided in the vehicle (12) to a first system color that indicates the driving assistance level after being changed, and (ii) displaying at least a part of the display area (20, 22) in a predetermined system color to temporarily highlight the at least part of the display area (20, 22).

9. A computer-readable storage medium storing a program for executing a process for vehicle display control, the process comprising, when a driving assistance level of a vehicle (12) is changed, (i) changing a background color of a part of a display area (20, 22) provided in the vehicle (12) to a first system color that indicates the driving assistance level after being changed, (ii) displaying at least a part of the display area (20, 22) in a predetermined system color to temporarily highlight the at least part of the display area (20, 22), and (iii) causing a computer to execute the process for the vehicle display control.
